# DEMANDE DE BREVET EUROPEEN

(11) **EP 3 649 864 A1**
(43) Date de publication de la demande: **13.05.2020**
(21) Numéro de dépôt: 19207859.0
(22) Date de dépôt: 08.11.2019
(51) Int. Cl.: A23B 4/044, A23C 9/156, A23L 27/27, A23L 2/56, D06M 13/00

(54) **FABRICATION D'UNE SUBSTANCE COMESTIBLE AYANT UN GOUT FUME A FAIBLE TENEUR EN HYDROCARBURES AROMATIQUES POLYCYCLIQUES**

(30) Priorité: 09.11.2018 FR 1860377
(71) Demandeur: Parmentier, Georges, 60610 La Croix Saint-Ouen (FR); Parmentier, Laurent, 60610 La Croix Saint-Ouen (FR)
(72) Inventeur: Parmentier, Georges, 60610 La Croix Saint-Ouen (FR); Parmentier, Laurent, 60610 La Croix Saint-Ouen (FR)
(74) Mandataire: Novagraaf Technologies

(57) **Abrégé**

La présente invention concerne un procédé de fabrication d'une substance comestible ayant un gout fumé, mettant en œuvre un tissu absorbant fumé à teneur réduite en hydrocarbures aromatiques polycycliques. Ce procédé permet de produire un aliment fumé respectant les normes légales quant aux teneurs en (hydrocarbures aromatiques polycycliques (usuellement désignés par l'acronyme HAP).

## Description

La présente invention concerne de manière générale un procédé de fabrication d'une substance comestible ayant un gout fumé, mettant en œuvre un tissu absorbant fumé à teneur réduite en hydrocarbures aromatiques polycycliques.

Les techniques traditionnelles de fumage (que ce soit le fumage à froid ou à chaud) des aliments présentent de nombreux inconvénients.

En particulier, l'une des craintes légitimes de l'artisan ou de l'industriel est de produire un aliment fumé ne respectant pas les normes légales quant aux teneurs en (hydrocarbures aromatiques polycycliques (usuellement désignés par l'acronyme HAP). Ces composés sont typiquement générés par la pyrolyse du bois, à température élevée, et certains d'entre eux ont des propriétés cancérigènes avérées, et en particulier le benzo[a]pyrène (usuellement désigné par l'acronyme B(a)P).

Une conduite prudente lors d'un procédé de fumage classique d'un aliment permet généralement d'en limiter la production, mais, par essence, une combustion lente n'est pas homogène. Cela signifie qu'un procédé de fumage classique est susceptible de générer des zones plus chaudes que d'autres dans l'aliment en cours de fumage, même de taille limitée, qui sont inévitables. Ce sont typiquement ces zones qui génèrent des HAP.

Le règlement européen CE 1881/2006 du 19 décembre 2006, portant fixation de teneurs maximales pour certains contaminants dans les denrées alimentaires, impose, pour les produits fumés carnés, une teneur maximale en B(a)P (pris comme HAP de référence car étant potentiellement le plus cancérigène) égale ou inférieure à 5 µg/kg de produit frais, et préconise à l'avenir un abaissement de ce seuil à 2 µg/kg.

Par ailleurs, le règlement européen CE 1881/2006 impose que, dans les produits fumés carnés, la teneur cumulée en B(a)P, benzo[a]anthracène (usuellement désigné par l'acronyme (B(a)A), benzo[a]fluoranthène (usuellement désigné par l'acronyme B(a)F) et chrysène soit égale ou inférieure à 30 µg/kg. Le règlement européen CE 1881/2006 préconise à l'avenir un abaissement de ce seuil à 12 µg/kg.

Par conséquent, un producteur de produits fumés en Europe doit, pour chacun des aliments fumés qu'il fabrique, respecter ces seuils. A cette fin, il doit être en mesure de prouver que ces seuils ne sont pas dépassés. Théoriquement, une analyse chimique permettrait de le confirmer, mais une telle analyse est très onéreuse et demande du temps.

La conduite la plus fréquente d'un fabriquant de produits fumés, et en particulier de produits carnés fumés consiste à l'heure actuelle à vérifier la conformité sur des lots dits témoins, et d'en déduire que la conduite scrupuleuse du fumage selon le protocole ayant donné des résultats acceptables est donc adaptée et reproductible. Il n'en subsiste pas moins un risque non négligeable de dépasser les teneurs limites imposées par le règlement européen CE 1881/2006, ce dépassement pouvant notamment surgir d'une déviation non détectée du protocole de fabrication.

Pour résoudre les problèmes précités, le déposant a mis procédé, qui comprend le fumage d'un tissu absorbant dans un fumoir, puis son introduction dans le conteneur recevant la substance comestible tel que décrit dans le brevet européen EP3075900B1, mettant en œuvre un tissu absorbant fumé à teneur réduite en hydrocarbures aromatiques polycycliques.

Plus particulièrement, la présente invention a pour objet un procédé de fabrication d'une substance comestible ayant un gout fumé, ledit procédé comprenant :
- la réalisation d'un tissu absorbant fumé, comprenant :
   ∘ la fourniture d'un tissu non tissé en viscose, avec un poids surfacique variant de 25 g/m² à 300 g/m² ;
   ∘ l'introduction dudit tissu dans un fumoir comprenant des copeaux ou de la poudre de fumage et à l'intérieur duquel la température est comprise entre 20°C et 80°C, et de préférence entre 50 et 65°C de manière à obtenir un tissu absorbant fumé ; et
- la mise en contact dudit tissu absorbant fumé ainsi obtenu avec ladite une substance comestible, cette mise en contact étant réalisée comme suit en fonction de la consistance de ladite substance :
   ∘ lorsque la substance est une substance liquide ou pâteuse, introduction directement dudit tissu absorbant dans un conteneur rigide ou souple puis agitation ou malaxation pour transférer le goût fumé ; ou
   ∘ lorsque la substance n'est ni liquide, ni pâteuse, enveloppement de ladite substance comestible dans ledit tissu absorbant pour transférer le goût fumé par imprégnation ;
ledit procédé étant caractérisé en ce que :
- ledit tissu absorbant fumé étant réalisé de manière à présenter une teneur en B(a)P égale ou inférieure à 20 µg/kg et une teneur cumulée en benzo[a]pyrène, benzo[a]anthracène, benzo[a]fluoranthène et chrysène égale ou inférieure à 120 µg/kg,
- en fonction de la quantité de substance comestible à fumer, on définit la surface de tissu absorbant appropriée destinée à être mise en contact avec ladite substance comestible,
- de manière que la teneur en B(a)P de ladite substance comestible est égale ou inférieure à 2 µg/kg et la teneur cumulée en benzo[a]pyrène, benzo[a]anthracène, benzo[a]fluoranthène et chrysène de ladite substance comestible est égale ou inférieure à 12 µg/kg.

Grâce au procédé selon l'invention, la teneur de HAP transférée à la substance comestible est directement proportionnelle à la teneur en HAP du tissu absorbant fumé et à la quantité de tissu employée pour le fumage, puisqu'en aucun cas les températures pratiquées ne vont permettre de générer de nouveaux HAP. Le procédé selon l'invention est un procédé rigoureux de fabrication qui garantit donc le respect des teneurs en HAP imposée par la norme européenne susmentionnée.

En fonction de la consistance de la substance comestible, trois différents modes de réalisation sont à envisager, comme indiqué ci-après.

Selon un premier mode de réalisation, la substance comestible que l'on souhaite aromatiser avec un gout fumé est une substance liquide. Dans ce cas, l'étape d'introduction du tissu dans le conteneur est suivie d'une étape d'agitation du conteneur, pour faciliter le transfert du gout fumé du tissu vers ladite substance.

Selon un deuxième mode de réalisation, la substance comestible que l'on souhaite aromatiser avec un gout fumé est une substance semi-liquide ou pâteuse (par exemple une sauce épaisse (non liquide) ou de la mayonnaise), qui est contenue dans un sachet souple pouvant être hermétiquement fermé à titre de conteneur. Dans ce cas, l'étape d'introduction du tissu dans le sachet souple est suivie
- d'une étape de fermeture dudit conteneur, puis
- d'au moins une étape de malaxage du sachet souple, pour faciliter le transfert du gout fumé du tissu vers ladite substance, qui peut être avantageusement suivie d'une étape de conservation à froid dudit sachet souple, de préférence à une température comprise entre 0 et 4°C.

Selon un troisième mode de réalisation, la substance comestible que l'on souhaite aromatiser avec un gout fumé n'est ni liquide, ni pâteuse (donc essentiellement solide). Dans ce cas, la substance comestible est enveloppée dans le tissu absorbant pour transférer le goût fumé par imprégnation.

De manière avantageuse, le tissu absorbant fumé peut présenter une teneur en B(a)P égale ou inférieure à 15 µg/kg et une teneur cumulée en benzo[a]pyrène, benzo[a]anthracène, benzo[a]fluoranthène B(a)F et chrysène égale ou inférieure à 115 µg/kg.

De préférence, le tissu absorbant fumé peut présenter une teneur en B(a)P égale ou inférieure à 10 µg/kg et une teneur cumulée en benzo[a]pyrène, benzo[a]anthracène, benzo[a]fluoranthène et chrysène égale ou inférieure à 110 µg/kg.

A titre de tissu absorbant, on utilise, de préférence, dans le cadre de la présente invention, un tissu non tissé constitué à 100% de viscose, avec un poids surfacique de l'ordre de 50 g/m². Un tel tissu est apte à absorber jusqu'à 20 fois son poids d'eau en moins de 8 secondes.

De manière avantageuse, on pourra utiliser pour le fumage du tissu absorbant des copeaux ou de la poudre de fumage (ou sciure de fumage) choisis parmi les copeaux secs ou humides de de bois de hêtre, de chêne, de tamarin, et de bouleau, la sciure de bois, et de préférence la sciure de bois de hêtre, et les écorces de châtaignes, de noix, et de fruits, etc..

Dans le procédé selon l'invention, il est également possible d'utiliser différentes essences de bois, ou de manière générale tout autre produit (notamment boisé), qui est généralement utilisé en fumage traditionnel.

Pour obtenir des substances comestibles ayant des gouts fumés différents, on pourra utiliser des toiles qui ont été fumées plus ou moins intensément.

Ainsi, si l'on souhaite conférer un gout fumé peu intense à un aliment (fumage dit « doux »), le tissu absorbant restera moins longtemps dans le fumoir (durée du fumage du tissu absorbant d'environ 6 heures).

Si l'on souhaite conférer un gout fumé moyennement intense à un aliment (fumage dit « moyen »), le tissu absorbant restera plus longtemps dans le fumoir (durée du fumage du tissu absorbant d'environ 12 heures).

Si l'on souhaite conférer un gout fumé très intense à un aliment (fumage dit « fort » ou « intense »), le tissu absorbant restera au moins 24 heures dans le fumoir.

L'utilisation du procédé selon l'invention pour donner un gout fumé selon l'invention à des substances comestibles, permet aux personnes étant au régime sans sel, de donner un goût fumé aux aliments qu'elles consomment ayant un goût fade par manque de sel.

Par ailleurs, les tissus absorbants (ou toiles) qui ont servi à transférer un gout fumé aux aliments (tel que du saumon par exemple) peuvent être utilisés une nouvelle fois (si les examens bactériologiques le permettent, par exemple pour transférer un gout fumé dans l'eau de cuisson des bulots.

Avant l'introduction du tissu fumé dans le conteneur, il est possible de mettre sous vide le tissu absorbant une fois fumé. En particulier, immédiatement après la phase de fumage, les tissus absorbants fumés peuvent être mis sous vide dans un sachet souple afin d'égaliser les odeurs de fumée entre les différentes toiles. Ainsi par exemple, on peut introduire dans un sachet sous vide entre 10 et 60 tissus fumés environ. Ce procédé peut durer entre quelques jours et plusieurs mois : une fois le tissu (s) fumé (s) introduit (s) dans le sachet, on fait le vide et on laisse sous vide pendant une durée pouvant aller de quelques jours) plusieurs semaines, voire plusieurs mois.

Dans ces paquets de tissu (s) absorbant (s) sous vide, ou dans une seule toile, il est possible d'incorporer en outre des produits alimentaires ou des aromates (par exemple du thym, du laurier, de l'ail, etc.) . Il se produit alors un transfert de gout entre les toiles et les produits alimentaires. Ensuite, les toiles et les produits alimentaires peuvent être utilisés individuellement pour des préparations culinaires.

L'invention est illustrée plus en détail dans les exemples suivants.

### EXEMPLES

### Produits

- filet de poisson (saumon) de 2 kg (exemple 2) ;
- filet mignon de porc de 1 kg (exemple 3)
- morceau de tissu absorbant non tissé en viscose, avec un poids surfacique de 53 g/m² et pouvant se présenter sous la forme d'un rectangle de dimensions 45 cm X 76 cm ; ce tissu est ensuite fumé dans un fumoir comprenant des copeaux ou de la poudre de fumage et à l'intérieur duquel la température est comprise entre 40°C et 80°C, conformément au procédé selon l'invention. La durée du fumage est comprise entre 6 et 24 heures.

### EXEMPLE 1 selon l'invention : évaluation de la teneur en HAP du premier morceau de tissu absorbant en viscose préalablement fumé

Des analyses chimiques effectuées sur le morceau de tissu absorbant fumé ont montré :
- une teneur en B(a)P de 10,6 ± 4,7 µg/kg,
- une teneur cumulée pour les 4 HAP de référence de 113,8 ± 50,1 µg/kg,
la faiblesse des teneurs en HAP conduisant à une forte incertitude sur les résultats.

### EXEMPLE 2 selon l'invention : poisson au gout fumé

On introduit dans un conteneur souple de type sachet alimentaire, utilisable pour la mise sous vide, le filet de saumon de 2 kg enveloppé dans le morceau de tissu absorbant en viscose préalablement fumé conformément au procédé selon l'invention.

La masse spécifique de la toile est de 53 g/m². Comme il faut environ 0,34 m² de tissu absorbant fumé pour fumer 2 Kg de saumon, cela correspond à une masse de tissu de 18,02 g.

Suivant la recette envisagée, on peut également y introduire des épices ou des aromates.

On maintient l'ensemble sous vide pendant 1 à 15 jours, dans un réfrigérateur à une température comprise entre 0 et 4°C. A l'issue de ce traitement, on obtient un filet de poisson ayant un gout fumé.

Ce traitement convient également à tout type de légumes.

### EXEMPLE 3 selon l'invention : filet mignon de porc au gout fumé

On introduit dans un conteneur souple de type sachet alimentaire, utilisable pour la mise sous vide, le filet mignon de porc enveloppé dans le premier morceau de tissu absorbant en viscose préalablement fumé, puis coupé en deux, ce qui correspond à une surface de 0,17 m².

La masse spécifique de la toile est de 53 g/m². Comme il faut environ 0,17 m² de tissu absorbant fumé pour fumer 1 Kg de filet mignon de porc, cela correspond à une masse de tissu de 9,01 g.

Suivant la recette envisagée, on peut également y introduire des épices ou des aromates. On met l'ensemble sous vide et l'on fait cuire de différentes façons. A l'issue de ce traitement, on obtient un morceau de viande ou de volaille cuit ayant un gout fumé.

Ce traitement convient également à tout type de légumes.

Toutes les proportions et durée sont données à titre indicatif pour l'ensemble des exemples. Elles sont à modifier en fonction du gout du consommateur.

### EXEMPLE 4 selon l'invention :

### détermination de la teneur en B(a)P et HAP du filet de poisson fumé préparé à l'exemple 2

En supposant que la totalité du B(a)P du morceau de tissu absorbant fumé soit transférée à la pièce fumée (hypothèse la plus défavorable, qui est hautement improbable), on en déduit que :
- la teneur maximale en B(a)P du filet de 2 kg de saumon ne saurait excéder 0,275 ± µg/kg ([(10,6 + 4,7) x 18] : 1000), ce qui correspond à une teneur de 0,138 µg/kg, et
- la teneur cumulée des 4 HAP du filet de 2kg de saumon ne saurait excéder 2,95 µg/kg (([(113,8 + 50,1) x 18] : 1000)), ce qui correspond à une teneur de 1,475 µg/kg,
soit des teneurs très largement inférieures aux normes réglementaires, qui sont respectivement de 2 µg/kg pour la teneur en B(a)P, et de 12 µg/kg pour la teneur cumulée des 4 HAP, en anticipant le durcissement des exigences de la norme européenne susmentionnée.

### EXEMPLE 5 selon l'invention :

### détermination de la teneur en B(a)P et HAP du filet mignon de porc fumé préparé à l'exemple 3

En supposant que la totalité du B(a)P du morceau de tissu absorbant fumé soit transférée à la pièce fumée (hypothèse la plus défavorable, qui est hautement improbable), on en déduit que :
- la teneur maximale en B(a)P du filet de 1 kg de filet mignon de porc ne saurait excéder 0,138 ± µg ([(10,6 + 4,7) x 9] : 1000), ce qui correspond à une teneur de 0,138 µg/kg, et
- la teneur cumulée des 4 HAP du filet de 2kg de saumon ne saurait excéder 1,475 µg (([(113,8 + 50,1) x 18] : 1000)), ce qui correspond à une teneur de 1,475 µg/kg,
soit des teneurs très largement inférieures aux normes réglementaires, qui sont respectivement de 2 µg/kg pour la teneur en B(a)P, et de 12 µg/kg pour la teneur cumulée des 4 HAP, en anticipant le durcissement des exigences de la norme européenne susmentionnée.

Les exemples 4 et 5 montrent bien que l'utilisation du tissu absorbant fumé conformément au procédé selon l'invention constitue donc bien une garantie de conformité des produits fumés, puisque c'est son fabricant qui assume la conformité des teneurs en composés indésirables.

## Revendications

1. Procédé de fabrication d'une substance comestible ayant un gout fumé, ledit procédé comprenant :
- la réalisation d'un tissu absorbant fumé, comprenant :
∘ la fourniture d'un tissu non tissé en viscose, avec un poids surfacique variant de 25 g/m² à 300 g/m² ;
∘ l'introduction dudit tissu dans un fumoir comprenant des copeaux ou de la poudre de fumage et à l'intérieur duquel la température est comprise entre 20°C et 80°C, et de préférence entre 50 et 65°C de manière à obtenir un tissu absorbant fumé ; et
- la mise en contact dudit tissu absorbant fumé ainsi obtenu avec ladite une substance comestible, cette mise en contact étant réalisée comme suit en fonction de la consistance de ladite substance :
∘ lorsque la substance est une substance liquide ou pâteuse, introduction directement dudit tissu absorbant dans un conteneur rigide ou souple puis agitation ou malaxation pour transférer le goût fumé ; ou
∘ lorsque la substance n'est ni liquide, ni pâteuse, enveloppement de ladite substance dans ledit tissu absorbant pour transférer le goût fumé par imprégnation ;
ledit procédé étant **caractérisé en ce que** :
- ledit tissu absorbant fumé étant réalisé de manière à présenter une teneur en B(a)P égale ou inférieure à 20 µg/kg et une teneur cumulée en benzo[a]pyrène, benzo[a]anthracène, benzo[a]fluoranthène et chrysène égale ou inférieure à 120 µg/kg,
- en fonction de la quantité de substance comestible à fumer, on définit la surface de tissu absorbant appropriée destinée à être mise en contact avec ladite substance comestible,
- de manière que la teneur en B(a)P de ladite substance comestible est égale ou inférieure à 2 µg/kg et la teneur cumulée en benzo[a]pyrène, benzo[a]anthracène, benzo[a]fluoranthène et chrysène de ladite substance comestible est égale ou inférieure à 12 µg/kg.

2. Procédé selon la revendication 1, dans lequel ledit tissu absorbant fumé présente une teneur en B(a)P égale ou inférieure à 15 µg/kg et une teneur cumulée en benzo[a]pyrène, benzo[a]anthracène, benzo[a]fluoranthène et chrysène égale ou inférieure à 115 µg/kg.

3. Procédé selon la revendication 2, dans lequel ledit tissu absorbant fumé présente une teneur en B(a)P égale ou inférieure à 10 µg/kg et une teneur cumulée en benzo[a]pyrène, benzo[a]anthracène, benzo[a]fluoranthène et chrysène égale ou inférieure à 110 µg/kg.

4. Procédé selon l'une quelconque des revendications 1 à 3, dans lequel le tissu absorbant est un tissu non tissé en viscose, avec un poids surfacique de l'ordre de 50 g/m².

5. Procédé selon l'une quelconque des revendications 1 à 4, dans lequel les copeaux ou de la poudre de fumage sont choisis parmi :
• les copeaux secs ou humides de bois de hêtre, de chêne, de tamarin, et de bouleau,
• la sciure de bois, de préférence de bois de hêtre, et
• les écorces de châtaignes, de noix, et de fruits.
